# EUROPEAN PATENT SPECIFICATION

(11) **EP 1 741 797 B1**
(45) Date of publication and mention of the grant of the patent: **14.05.2008**
(21) Application number: 06380191.4
(22) Date of filing: 06.07.2006
(51) Int. Cl.: C22B 7/00, C22B 21/00, F27B 7/00

(54) **Installation for the recovery of metals included in laminated materials in a rotary-drum furnace**
Einrichtung zur Rückgewinnung von in laminierten Materialien enthaltenen Metallen in einem Drehrohrofen
Installation pour la récupération des métaux contenus dans des produits laminés dans un four tubulaire rotatif

(30) Priority: 06.07.2005 ES 200501644
(43) Date of publication of application: 10.01.2007
(73) Proprietor: Recialum S.L., 22534 Albalate de Cinca, Huesca (ES)
(72) Inventor: Bellef Bort, Jose Ramon, 22534 Albalate de Cinca (Huesca) (ES); Hernandez Prats, Francisco, 22534 Albalate de Cinca (Huesca) (ES)
(74) Representative: Carvajal y Urquijo, Isabel

(56) References cited:
- DE-A1- 4 237 161
- DE-A1- 4 304 294
- US-A- 4 988 289
- US-A- 5 549 058
- US-B1- 6 268 590

## Description

### Field and Object of the Invention

The invention is included within the field of recycling and more specifically it relates to an installation intended for the recovery or recycling of metals, such as aluminium, forming part of laminated materials formed by a sheet or layer of metallic material, coated with one or several layers of plastic, textile or cellulose material or other type of coatings, such as for example, plasticized sheets used in many packages for containing different products such as for example foods, beverages, cleaning material, sanitary material, etc.

### State of the Art

Processes and installations for separating metals from composite laminated bodies are currently known. Most of the known processes are based on subjecting the composite laminated bodies to a controlled temperature that is higher than the vaporization temperature of the coating material and lower than the melting temperature of the sheet or layer of metallic material.

In such processes, there is normally an installation consisting of an outer chamber of refractory material inside which there is a heating chamber inside which there is in turn a treatment chamber rotating with respect to the heating chamber, the treatment chamber being actuated by an outer motor. The heating of the material to be treated is done by means of providing burners connected to the outer chamber. Hoppers with respective valves for the entrance of the material to be recycled are provided for introducing the material to be recycled. The treatment chamber has an exhaust duct for the gases produced by the combustion of the coating materials.

In turn, the heating chamber is normally slightly inclined so as to allow the treated material to move forward through the treatment chamber until it reaches the end thereof in which only the metal will remain, the coating materials having been eliminated by pyrolysis, and in which there is an evacuation duct for the metal which will exit by gravity with the aid of an inner helical conveyor.

DE-A-4304294 discloses an installation for the recovery of aluminum included in crushed laminated materials such as packages for beverages comprising:

A hopper, treatment means (rotary-drum furnace) for the laminated material, comprising to pipes located concentrically, being a rotating inner pipe and an outer pipe, conveying means, entrance means comprising an inlet pipe connected to the combustion chamber and a driving element for the material to be treated, outlet means comprising an outlet pipe connected to the combustion chamber and a driving element for the material and insulating means for the treatment means. The driving elements comprise a screw feeder for moving the material in a loose, compressionless and thus not airtight manner.

The commented installations have a series of limitations and drawbacks, amongst which the following stand out:
- The recycling process can never be continuous because when the material to be recycled contained in each silo has finished it is necessary to stop the process to fill each silo again.
- The tightness of this type of system is not complete because since the material is introduced inside the furnace through a simple valve, the air contained in the silo will enter the combustion chamber, making the pyrolysis reaction produced rather unsafe due to the combustion of the oxygen in the air, and even small explosions can occur.
- In the known installations it is strictly necessary for the combustion chamber to be inclined so that the material to be recycled can move forward throughout the furnace and therefore so that the volatilization of the plastics or materials to be eliminated can take place, in the event that there is any piece or portion of material larger than normal, there are jams in the passage of the material with the damage that this can cause for the rest of the process. Furthermore, the passage of material occurs only in one direction, the material not being able to move back in the event that it is necessary.

Therefore, a need has been detected to design an installation for recycling this type of materials that can prevent the commented drawbacks as much as possible as a result of the use of a continuous feeding system for feeding the material to be recycled, of introduction means for introducing the material to be recycled in the combustion chamber allowing the complete tightness in the introduction process and of conveying means for conveying the material to be recycled inside the combustion chamber.

This objective is achieved by means of the invention as it is defined in claim 1, and preferred embodiments are defined in the dependent claims.

### Description of the Invention

The present invention relates to an installation for the recovery of metals included in laminated materials as defined in claim 1.

It is thus achieved that both the entrance of untreated material and the outlet of treated material is completely airtight, thus preventing air from entering inside the combustion chamber and therefore preventing the entrance of oxygen in the mentioned enclosure so that a violent combustion does not occur inside the same and thus preventing dangerous explosions from occurring inside said combustion chamber.

In a second aspect of the invention, the conveying means for the laminated material inside the combustion chamber comprise a plurality of vanes coupled to the inner wall of the inner pipe of the combustion chamber, covering a certain length of the total length of said pipe and having a certain inclination with respect to the axis of rotation of the inner pipe.

In this way and as a result of the configuration and arrangement of the mentioned vanes, the conveyance of the material to be treated inside the combustion chamber is achieved without needing to incline the inner pipe so that the material is conveyed by the simple effect of gravity.

On the other hand, the combination of the mentioned vanes with the rotation of the inner pipe causes the stirring of the material which is being treated, therefore the elimination by pyrolysis of the materials coating the metallic laminated material occurs with greater efficiency because there is a larger treatment surface of the pieces of material to be treated since they are continuously falling downwards, the application of heat from the burners installed in the combustion chamber being much more direct and therefore needing less amount of fuel used by the burners with the energy and economic savings that this entails.

Furthermore, as a result of the mentioned vanes, it is possible to reverse the advancing direction of the material which is being treated by simply reversing the direction of rotation of the motor driving the rotation of the inner pipe, thereby being possible to eliminate small jams of material that may occur by simply reversing the advancing direction of the material for a few moments and later re-establishing it.

In another aspect of the invention, the rotation of the inner pipe of the combustion chamber with respect to the fixed outer pipe is carried out by means of the arrangement of a plurality of intermediate rollers, the axis of rotation of which is parallel to the axis of revolution of the inner and outer pipes and is fixed to the support base of the installation so that the inner pipe is supported directly on the mentioned rollers, the rotation thereof being driven by means of a motor located at the outlet of the outer pipe..

It is thus achieved that the inner pipe does not undergo deformations such as twisting, given that since the temperature inside the combustion chamber is so high, there is a risk that the metal which the mentioned inner pipe is made of will reach its yield point and significant deformations thereof will occur with the application of small stresses.

According to a last aspect of the invention, the insulating means for insulating the treatment means comprise a plurality of panels of insulating material determining an envelopment covering the entire outer pipe, said envelopment being placed on an outer structure of metallic material.

Heat losses during the treatment process are thus considerably reduced and a greater energy efficiency is achieved during the recycling process.

### Description of the Drawings

A series of drawings aiding in better understanding the invention and expressly related to embodiments of said invention are briefly described below and are shown as illustrative and non-limiting examples thereof.

Figure 1 shows a schematic view of the installation for the recovery of metals included in laminated materials, object of the present invention.

Figure 2 shows a sectional view of the installation according to the plane of section I-I of Figure 1.

Figure 3 shows a sectional view of the installation according to the plane of section II-II of Figure 1.

Figure 4 shows a schematic partial view of the entrance area of the material to be treated in the installation for the recovery of metals included in laminated materials, object of the present invention.

Figure 5 shows a schematic partial view of the outlet area for the material once it has been treated in the installation for the recovery of metals included in laminated materials, object of the present invention.

### Description of an Embodiment of the Invention

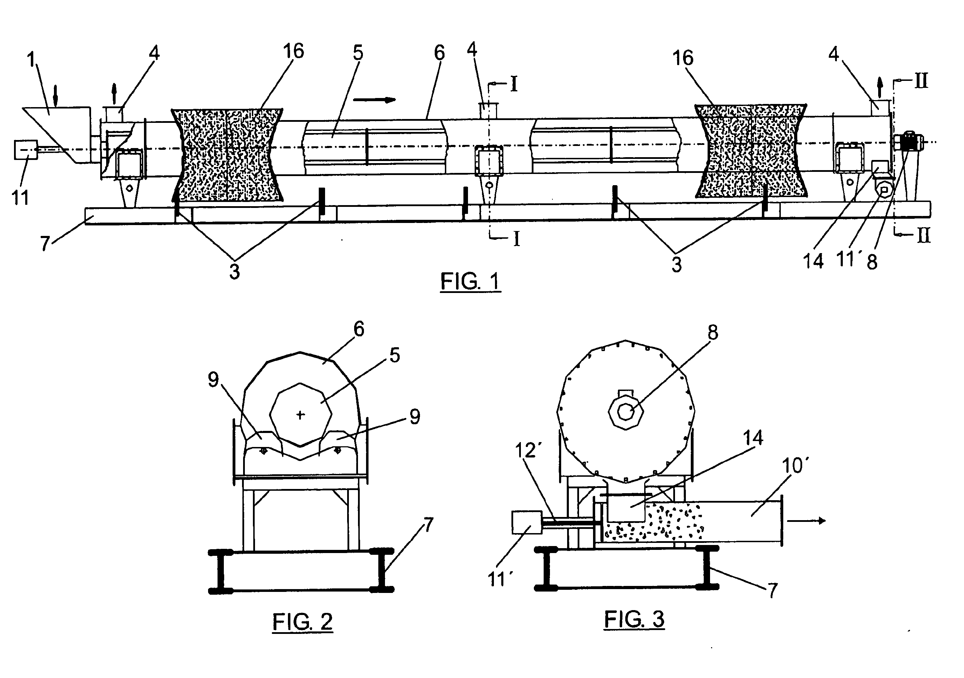

As can be seen in Figure 1, the installation for the recovery of metals included in laminated materials comprises the following elements.

In the first place, there are storage means for storing the crushed laminated material which in this embodiment consist of a continuously filled hopper 1, filled with the crushed material to be treated from a crushing device that is not represented in the Figure. The mentioned hopper 1 has an opening 2 at its base for the passage of the crushed material to be treated to the entrance means thereof for entering the treatment means.

On the other hand, the installation has treatment means which in turn comprise a combustion chamber, a plurality of combustion elements which in this particular case are burners 3, being gas oil burners or of any other nature, and several outlet pipes 4 for the gases resulting from the combustion, which in the case of this embodiment are located in the entrance area and an intermediate area of the installation.

In turn, the combustion chamber has two pipes of great length located concentrically, a rotating inner pipe 5 and a fixed or stationary outer pipe 6 normally fixed to the support base 7 of the installation, the inner pipe 5 rotating with respect to said outer pipe 6, its rotation being actuated by means of a motor located at the end of the outlet area for the material once it has been treated. To achieve the relative rotation between the inner pipe 5 and the outer pipe 6, a plurality of rollers 9 are arranged at end and intermediate points of the installation, such rollers 9 having their axis of rotation parallel to the axis of revolution of the inner pipe 5 and outer pipe 6, said axis of rotation being fixed to the support base 7 of the rest of the elements of the installation such that the inner pipe 5 is directly supported on the rollers 9 and rotates as a result of the actuation of the motor 8 with respect to the outer pipe 6. The figure shows in detail the location of the mentioned rollers 9, in this case, two rollers are arranged one on each side of the inner pipe 5.

The material to be treated from the hopper 1 enters the combustion chamber through the entrance means formed by an inlet pipe 10 connected to the combustion chamber and a driving element for the material to be treated which in this embodiment consist of a piston 11 the rod 12 of which moves in an airtight manner inside the inlet pipe 10, the length of said rod 12 being less than the total length of the inlet pipe 10 and greater than the width of the opening 2 of the hopper 1. As a result, the piston 11, in its forward motion and after passing the mentioned opening 2, leaves a first amount of material plugging the final section of the inlet pipe 10 and this plugging prevents air from entering inside the combustion chamber. The rod 12 subsequently retreats to a point in which it leaves the opening 2 completely or partially open and therefore, it lets a second amount of material fall from the opening 2 of the hopper 1 to the inlet pipe 10 and it moves forward again, pushing the second amount of material to be treated towards the inlet pipe 10, this second amount of material pushes the first amount which was plugging the final section of the inlet pipe 10, said first amount falling inside the combustion chamber, this same process occurs continuously achieving the introduction of the material to be treated in the combustion chamber without air entering therein and therefore preventing the entrance of oxygen which can cause violent combustions therein and therefore dangerous explosions.

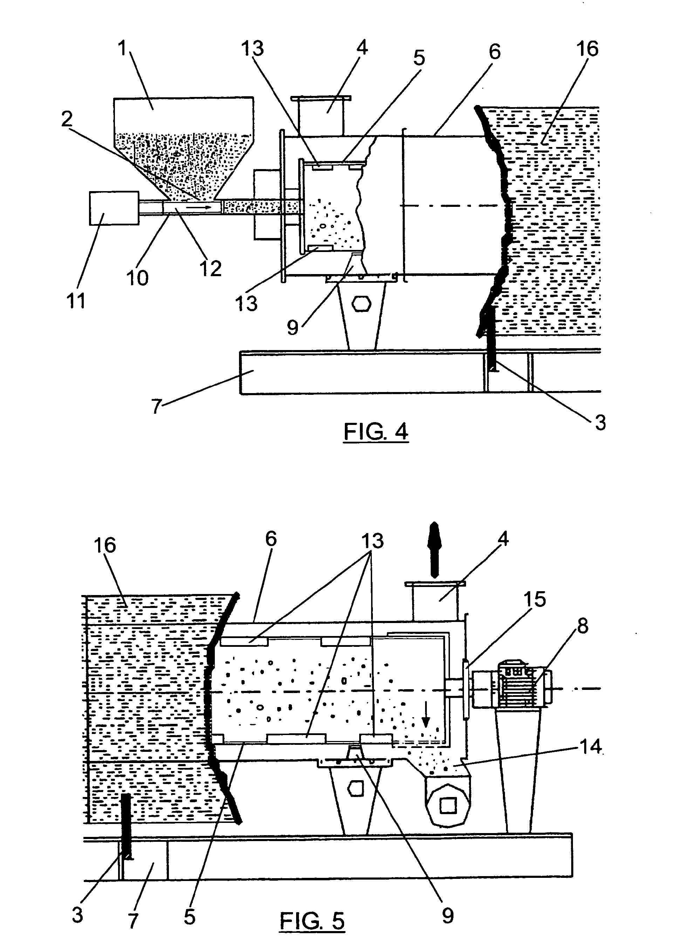

Once the material to be treated has entered the combustion chamber, it is conveyed throughout the inner pipe 5 as a result of the rotation thereof with respect to the outer pipe 6 and with the aid of conveying means for conveying the material which in this embodiment of the invention consist of arranging a plurality of vanes 13 on the inner wall of the inner pipe 5, said vanes 13 will cover a certain length of the total length of said inner pipe 5, will have a certain inclination with respect to the axis of rotation thereof and will be arranged radially on the mentioned inner wall alternating with each other as can be seen in figures 4 and 5.

The mentioned vanes 13 combined with the rotation of the inner pipe 5 enable the forward motion of the material throughout the combustion chamber and further cause the stirring of the material during the pyrolysis process of the material coating the material to be treated, this stirring making the pyrolysis process more efficient because there is more heating surface of each piece of material being treated and there are hardly any residues adhered to the metal.

The material passes through the combustion chamber which is normally several metres long, normally 15 metres, in which the heating of the laminated material being coated by the materials to be eliminated occurs at around 380 - 400°C, temperature at which the material to be eliminated is volatilized in the form of gases exiting through the outlet pipes 4 for the combustion gases, this temperature being, however, lower than the melting temperature of the metal, in most cases aluminium. Said combustion gases can pass to a turbine which passes them to a boiler, it being possible to use the heat of the gases for generating power which will be used again in the installation.

The treatment process will last between 25 and 30 minutes and will be carried out in a vacuum, therefore, it is important to not let air enter during the entrance and outlet of the material to and from the combustion chamber.

In the final portion of the combustion chamber, once the material has already been treated and therefore the impurities of the materials coating the laminated material have been eliminated, a small inner hopper 14 is arranged in which the treated material is accumulated, having an opening at its inner part communicated to the outlet means which, in a similar manner to the entrance means, are formed by an outlet pipe 10' connected to the mentioned hopper 14 and a driving element for the treated material specifically consisting of a second piston 11' the rod 12' of which moves in an airtight manner inside the outlet pipe 10', the length of the mentioned rod 12' being lower than the total length of the outlet pipe 10' and greater than the width of the mentioned opening of the hopper 14. The operation of this piston 11' is similar to that of the piston 11 used in the entrance means, said piston 11', in its forward motion, leaves a first amount of material plugging the final section of the outlet pipe 10', and this plugging prevents air from entering inside the combustion chamber. The piston 11' subsequently retreats to a point in which it leaves the opening of the hopper 14 open and therefore it lets a second amount of material fall from the mentioned opening of the hopper 14 to the outlet pipe 10' and it moves forward again, pushing the second amount of material to be treated towards the end of the outlet pipe 10', this second amount of material pushes the first amount which was plugging the final section of the outlet pipe 10', said first amount exiting the outlet pipe 10' and being deposited in containers or any other similar collecting element, this same process occurs continuously achieving the outlet of the treated material from the combustion chamber towards the exterior, without air entering therein and therefore, preventing the entrance of oxygen which can cause violent combustions as commented.

As can be seen in Figure 5, a stuffing box 15 is arranged in the area in which the motor 7 actuating the movement of the inner pipe 5 is located, with the aim of assuring the tightness of the combustion chamber.

Finally, and with the aim of obtaining the best possible heat efficiency of the installation by minimizing heat losses, the treatment means are surrounded by insulating means comprising a plurality of panels of heat insulating material defining an envelopment 16 covering the entire length of the outer pipe 6 of the combustion chamber. Said envelopment is reinforced with an outer structure normally made of metallic material.

## Claims

1. An installation for the recovery of metals included in laminated materials comprising
- storage means for storing the crushed laminated material, said material coming from a crushing device, the storage means of which comprise at least one continuously filled hopper (1) having an opening (2) at its base for the outlet of the crushed material,
- treatment means for the laminated material comprising a combustion chamber formed by two pipes located concentrically, being a rotating inner pipe (5) and an outer pipe (6) fixed to the rest of the elements of the installation, a plurality of combustion elements (3) and at least one outlet pipe (4) for the gases resulting from the combustion,
- conveying means for conveying the laminated material throughout the inside of the combustion chamber,
- entrance means for the entrance of untreated laminated material to the treatment means, the entrance means of which comprise an inlet pipe (10) connected to the combustion chamber and a driving element for the material to be treated,
- outlet means for the outlet of treated laminated material from the treatment means, the outlet means of which comprise an outlet pipe (10') connected to the combustion chamber and a driving element for the material once it has been treated and,
- insulating means for the treatment means,
**characterized in that** the driving elements for material of both the entrance means for the untreated material and the outlet means for the treated material comprise respective pistons (11-11'), a rod (12-12') of which is moving in an airtight manner inside the inlet (10) and outlet (10') pipes, the length of the rods (12-12') being less than the total length of the inlet (10) and outlet pipes (10') respectively, such that the cited rods (12-12'), in their forward motion, leave a certain amount of material plugging the final section of the inlet pipe (10) and preventing air from entering inside the treatment means.

2. An installation according to claim 1, **characterized in that** the conveying means for the laminated material inside the combustion chamber comprise a plurality of vanes (13) coupled to the inner wall of the inner pipe (5) of the combustion chamber, covering a certain length of the total length of said pipe and having a certain inclination with respect to the axis of rotation of the inner pipe (5).

3. An installation according to any of the previous claims, **characterized in that** the rotation of the inner pipe (5) of the combustion chamber with respect to the fixed outer pipe (6) is carried out by means of the arrangement of a plurality of intermediate rollers (9), the axis of rotation of which is parallel to the axis of revolution of the inner and outer pipes and is fixed to the support base (7) of the installation such that the inner pipe (5) is directly supported on the mentioned rollers (9), the rotation thereof being driven by means of a motor (8) located at the outlet of the outer pipe.

4. An installation according to any of the previous claims, **characterized in that** the insulating means for the treatment means comprise a plurality of panels of insulating material defining an envelopment (16) covering the entire outer pipe, an outer structure of metallic material being located on said envelopment.

## Patentansprüche

1. Anlage zur Rückgewinnung von Metallen, die in laminierten Materialien enthalten sind, wobei die Anlage Folgendes umfasst :
- Speichermittel zum Speichern des zerkleinerten laminierten Materials, wobei das Material aus einer Zerkleinerungsvorrichtung kommt, wobei die Speichermittel der Anlage mindestens einen kontinuierlich befüllten Einfülltrichter (1) umfassen, der eine Öffnung (2) an seiner Basis aufweist, um zerkleinertes Material auszulassen,
- Behandlungsmittel für das laminierte Material, die Folgendes umfassen: eine Brennkammer, die durch zwei Rohre gebildet wird, die konzentrisch angeordnet sind und bei denen es sich um ein rotierendes inneres Rohr (5) und ein äußeres Rohr (6), das an dem Rest der Elemente der Anlage befestigt ist, handelt, mehrere Brennelemente (3) sowie mindestens ein Auslassrohr (4) für die bei der Verbrennung entstehenden Gase,
- Transportmittel zum Transportieren des laminierten Materials durch das gesamte Innere der Brennkammer,
- Eingangsmittel für den Eingang von unbehandeltem laminierten Material in die Behandlungsmittel, wobei die Eingangsmittel der Anlage ein Einlassrohr (10), das mit der Brennkammer verbunden ist, sowie ein Antriebselement für das zu behandelnde Material umfassen,
- Auslassmittel für den Auslass von behandeltem laminierten Material aus den Behandlungsmitteln, wobei die Auslassmittel der Anlage ein Auslassrohr (10'), das mit der Brennkammer verbunden ist, sowie ein Antriebselement für das Material, nachdem es behandelt wurde, umfassen, und
- Isoliermittel für die Behandlungsmittel,
**dadurch gekennzeichnet, dass** die Antriebselemente für Material sowohl der Eingangsmittel für das unbehandelten Material als auch der Auslassmittel für das behandelten Material jeweilige Kolben (11-11') umfassen, wobei sich eine Stange (12-12') der Kolben (11-11') in einer luftdichten Weise innerhalb des Einlassrohres (10) und des Auslassrohres (10') bewegt, wobei die Länge der Stangen (12-12') geringer als die Gesamtlänge des Einlassrohres (10) bzw. des Auslassrohres (10') ist, dergestalt, dass diese Stangen (12-12'), in ihrer Vorwärtsbewegung eine bestimmte Materialmenge als Pfropfen in dem Endabschnitt des Einlassrohres (10) übrig lassen, so dass keine Luft in die Behandlungsmittel eindringen kann.

2. Anlage nach Anspruch 1, **dadurch gekennzeichnet, dass** die Transportmittel für das laminierte Material im Inneren der Brennkammer mehrere Schaufeln (13) umfassen, die mit der Innenwand des inneren Rohres (5) der Brennkammer verbunden sind und eine bestimmte Länge der Gesamtlänge.des Rohres abdecken und eine bestimmte Neigung relativ zu der Drehachse des inneren Rohres (5) aufweisen.

3. Anlage nach einem der vorangehenden Ansprüche, **dadurch gekennzeichnet, dass** die Drehung des inneren Rohres (5) der Brennkammer relativ zu dem festen äußeren Rohr (6) mittels der Anordnung mehrerer Zwischenrollen (9) bewerkstelligt wird, deren Drehachse parallel zu der Drehachse des inneren und des äußeren Rohres verläuft und an der Tragbasis (7) der Anlage dergestalt fixiert ist, dass das innere Rohr (5) direkt auf den Rollen (9) gelagert ist, wobei deren Drehung mit Hilfe eines Motors (8) bewerkstelligt wird, der an dem Auslass des äußeren Rohres angeordnet ist.

4. Anlage nach einem der vorangehenden Ansprüche, **dadurch gekennzeichnet, dass** die Isoliermittel für die Behandlungsmittel mehrere Paneele aus Isoliermaterial umfassen, die eine Umhüllung (16) definieren, die das gesamte äußere Rohr bedeckt, wobei eine äußere Struktur aus metallischem Material auf der Umhüllung angeordnet ist.

## Revendications

1. Installation pour la récupération de métaux compris dans des matériaux feuilletés comprenant :
- des moyens de stockage pour stocker le matériau feuilleté broyé, ledit matériau provenant d'un dispositif de broyage, dont les moyens de stockage comprennent au moins une trémie (1) remplie en continu, ayant une ouverture (2) à sa base, pour la sortie du matériau broyé,
- des moyens de traitement pour le matériau feuilleté, comprenant une chambre de combustion constituée de deux tubes placés concentriquement qui sont un tube intérieur (5) rotatif et un tube extérieur (6) fixé au reste des éléments de l'installation, une pluralité d'éléments de combustion (3) et au moins un tube de sortie (4) pour les gaz résultant de la combustion,
- des moyens de transport pour transporter le matériau feuilleté tout au long de l'intérieur de la chambre de combustion,
- des moyens d'entrée pour l'entrée de matériau feuilleté non traité dans les moyens de traitement, dont les moyens d'entrée comprennent un tube d'entrée (10) relié à la chambre de combustion et un élément d'entraînement pour le matériau à traiter,
- des moyens de sortie pour la sortie du matériau feuilleté traité depuis les moyens de traitement, dont les moyens de sortie comprennent un tube de sortie (10') relié à la chambre de combustion et un élément d'entraînement pour le matériau une fois qu'il a été traité, et
- des moyens d'isolation pour les moyens de traitement,
**caractérisée en ce que** les éléments d'entraînement pour le matériau à la fois des moyens d'entrée pour le matériau non traité et des moyens de sortie pour le matériau traité, comprennent des pistons (11, 11') respectifs dont une tige (12, 12') se déplace de manière étanche à l'air à l'intérieur des tubes d'entrée (10) et de sortie (10'), la longueur des tiges (12, 12') étant inférieure à la longueur totale des tubes d'entrée (10) et de sortie (10') respectivement, de telle sorte que les tiges (12, 12') citées, dans leur mouvement vers l'avant, laissent une certaine quantité de matériau qui bouche la section finale du tube d'entrée (10) et empêche l'air de pénétrer à l'intérieur des moyens de traitement.

2. Installation selon la revendication 1, **caractérisée en ce que** les moyens de transport pour le matériau feuilleté à l'intérieur de la chambre de combustion, comprennent une pluralité d'ailettes (13) couplées à la paroi intérieure du tube intérieur (5) de la chambre de combustion, couvrant une certaine longueur de la longueur totale dudit tube et ayant une certaine inclinaison par rapport à l'axe de rotation du tube intérieur (5).

3. Installation selon l'une quelconque des revendications précédentes, **caractérisée en ce que** la rotation du tube intérieur (5) de la chambre de combustion par rapport au tube extérieur (6) fixe est réalisée au moyen de l'agencement d'une pluralité de galets (9) intermédiaires dont l'axe de rotation est parallèle à l'axe de révolution des tubes intérieur et extérieur et qui est fixé à la base de support (7) de l'installation, de telle sorte que le tube intérieur (5) est directement supporté sur les galets (9) mentionnés, dont l'axe de rotation est entraîné au moyen d'un moteur (8) situé à la sortie du tube extérieur.

4. Installation selon l'une quelconque des revendications précédentes, **caractérisée en ce que** les moyens d'isolation pour les moyens de traitement comprennent une pluralité de panneaux en matériau isolant définissant une enveloppe (16) recouvrant le tube extérieur entier, une structure extérieure en matériau métallique étant placée sur ladite enveloppe.
